# NEW EUROPEAN PATENT SPECIFICATION

(11) **EP 0 738 291 B2**
(45) Date of publication and mention of the opposition decision: **02.01.2003**
(45) Mention of the grant of the patent: 05.11.1997
(21) Application number: 94918317.2
(22) Date of filing: 13.05.1994
(51) Int. Cl.: C08G 18/08, C08G 18/46

(54) **AQUEOUS CROSSLINKABLE COATING COMPOSITIONS**
WÄSSRIG VERNETZBARE BESCHICHTUNGSZUSAMMENSETZUNGEN
ENDUIT AQUEUX RETICULABLE

(30) Priority: 28.05.1993 GB 9311139
(43) Date of publication of application: 23.10.1996
(73) Proprietor: Avecia B.V., 5140 AC Waalwijk (NL)
(72) Inventor: OVERBEEK, Gerardus, Cornelis, NL-5144 EG Waalwijk (NL); PEARS, David, Alan, Cheshire CH3 6BJ (GB); TENNEBROEK, Ronald, Adrianus, Norbertus, Petrus, NL-5042 KC Tilburg (NL)
(74) Representative: Schmitt, Maja
(86) International application number: EP9401548
(87) International publication number: WO94028043

(56) References cited:
- EP-A- 0 054 803
- EP-A- 0 537 568
- FR-A- 2 290 460
- US-A- 4 150 946
- CHEMICAL ABSTRACTS, vol. 96, no. 10, March 1982, Columbus, Ohio, US; abstract no. 69932e, 'POLYURETHANE WATER DISPERSIONS' page 41 ;column 1 ; & JP,A,56 135 547 (TOYOBO) 23 October 1981
- T 0205/83, O.J. EPO 1985, 363
- Houben-Weyl, Methoden der organischen Chemie, vol. E20, 4th edition, Georg Thiem Verlag, Stuttgart,DE, 1987, pp. 1604/05
- Encyclopedia of Polymer Science and Technology, Wiley Interscience, 1988, vol. 13, pp. 243 and 251
- Ullmann's Encyclopedia of Industrial Chemistry, VCH Verlagsgesellschaft, weinheim/DE, 1992, vol. A21, pp. 665 and 673
- K. Dören et al. : Wasserlacke : Umweltschonende Alternative für Beschichtunhgen, technische Akademie Wuppertal, Verlag TÜV Rheinland, Kölm/DE, 1992, pp. 50-53 and 106-109

## Description

The present invention relates to an aqueous-based crosslinkable coating composition comprising an aqueous dispersion of a certain hydroxyl-functional polyester oligomer and an organic polyisocyanate.

The provision of polymeric coatings from coating compositions for use on a variety of substrates for various purposes (e.g. protective, decorative, adhesive or sealant purposes) is well known. It is also well known to improve the performance of such coatings by causing them to become crosslinked (cured) after coating formation. For this purpose it is known to employ crosslinkable coating compositions where the composition includes components which react to cause crosslinking when a coating is formed from the composition - such as a polymer having reactive functional groups and a coreactant material having 2 or more groups reactable with those of the functionalised polymer. As might be imagined, many such coating compositions have a very short pot life due to premature reactions or unwanted side reactions occurring in the composition (as often manifested by a very large increase in viscosity and subsequent gelation).

In one general class of crosslinkable composition there are employed polymers or oligomers which bear hydroxyl groups (i.e. are hydroxy-functional) and organic polyisocyanates, the latter's NCO groups reacting with the former's hydroxyl groups to cause further polymerisation and (normally) crosslinking after coating formation from the composition; with such compositions, therefore, urethane polymers are formed in-situ on the substrate to which the composition has been applied. Such compositions have, however, hitherto largely been solvent-based rather than water-based because of the perceived problem of unwanted reactions occurring between the NCO groups of the polyisocyanate and water to form amino groups (and carbon dioxide) which would then further react with NCO groups to form unwanted urea-linked polymers at the expense of crosslinking the hydroxyl-functional polymer, not to mention the occurrence of foaming due to the carbon dioxide evolution.

Nevertheless, the impetus to change from solvent-based systems to water-based ones is ever present due to the environmental problems posed by the use of solvents, and water-based coating compositions comprising hydroxyl-functional polymers or oligomers and organic polyisocyanates have now been proposed in the patent literature.

AU-A-41135/89 (equivalent to EP-A-0358979), for example, discloses coating compositions based on a hydroxyl-functional acrylic polymer and an organic polyisocyanate, the acrylic polymer being in aqueous solution and/or dispersion and the polyisocyanate being present in emulsified form in the acrylic solution or dispersion. The acrylic polymer is stabilised by the incorporation of carboxylic or sulphonic acid comonomer units which have been neutralised using an appropriate base, such as an amine or ammonia, to form stabilising carboxylate or sulphonate anions. The compositions are said to have a pH of from about 5 to 10 (preferably 6 to 9). However, the pot life of the composition, once the polyisocyanate has been dispersed into the acrylic solution or dispersion, is said to be only several hours, with 4 hours being the longest pot life specifically mentioned in the examples.

In CA-A-2059420 (equivalent EP-A-0496205) there is disclosed aqueous coating compositions based on water-dispersible polyester polyols having urethane, carboxyl and hydroxyl groups, in which dispersibility is achieved by the presence of carboxylate anion groups derived from the carboxyl groups - the latter preferably (and particularly in the examples) being formed by neutralisation using amines or ammonia. The polyesters generally have number average molecular weight of 3,000-100,000 and the aqueous polyester dispersion has pH of 5 to 10. Nevertheless, the examples indicate that the compositions still have pot lives of only 4 to 8 hours.

More recently, EP-A-0537568 has disclosed certain aqueous binder compositions based on an aqueous solution or dispersion of a water-dilutable polyester resin containing sulphonate and hydroxyl groups, and a polyisocyanate component. However, the binder compositions which are exemplified, which all contain dimethyl ethanolamine are said to have a gel time of 3 to 6 hours.

Accordingly, there is undoubtedly room for further improvement in this type of crosslinkable coating composition.

We have now discovered a highly effective and useful type of aqueous-based coating composition based on certain water-dispersible hydroxyl-functional polyester oligomers and organic polyisocyanates. Such compositions have considerably improved pot life in comparison to compositions such as those described above and also provide coatings possessing excellent properties, e.g. good solvent resistance, excellent hardness and high gloss.

According to the present invention there is provided an aqueous-based crosslinkable coating composition comprising:
(A) an aqueous dispersion of at least one hydroxyl-functional polyester oligomer in which:
   (i) said polyester has an average hydroxyl functionality of ≥ 2.3;
   (ii) said polyester incorporates chain pendant sulphonate anion groups which impart water-dispersibility thereto;
   (iii) said polyester has a number average molecular weight within the range of from 500 to below 2,500; and preferably has a pH of between 1.5 to less than 5; and
(B) at least one organic polyisocyanate, which is preferably present in component (A) in emulsified form,
wheren said composition is free of any added amine or ammonia and any amine or ammonium cations.

There is also provided according to the invention a method of coating a substrate, which method comprises applying a coating composition as defined supra to a substrate, causing or allowing the aqueous-based carrier phase of the composition to be removed, and developing crosslinking of the coating that has been applied to the substrate.

There is further provided according to the invention a crosslinked coating which has been derived from a coating composition as defined supra.

There is further provided according to the invention a coated substrate which has been prepared by applying a coating composition as defined supra to a substrate, causing or allowing the aqueous-based carrier phase of the composition to be removed, and developing crosslinking of the coating that has been applied to the substrate.

The aqueous dispersion of the polyester could, for example, be a colloidal dispersion of the oligomeric polyester material in water (i.e. an emulsion or latex) or a solution (molecular dispersion) of the oligomeric material in water, or a dispersion system which is intermediate a colloidal dispersion and a solution (in terms of particle size), or partly a colloidal solution and partly a solution. Minor quantities of organic liquid may optionally be present.

The compositions of the invention possess significantly prolonged pot lives (the time in which the composition is usefully applicable to a substrate prior to its viscosity becoming unacceptably high, i.e. the time during which the dispersion has good stability) and pot lives of in excess of 24 hours have been achieved, with film properties being reasonably good after this period and even completely unchanged for 8 to 10 hours after mixing the components. The reason for the improved pot life is believed to be basically due to the deliberate absence of added amine or ammonia (and amine or ammonium cations) in the system (such as is e.g. normally used for neutralisation purposes to form dispersing anions from acidic groups such as carboxy).

The hydroxy-functional polyester can be prepared using conventional polymerisation procedures known to be effective for polyester synthesis. Thus, it is well known that polyesters, which contain carbonyloxy (i.e. -C(=O)-O-) linking groups may be prepared by a condensation polymerisation process in which an acid component (including ester-forming derivatives thereof) is reacted with a hydroxyl component. The acid component may be selected from one or more polybasic carboxylic acids such as di- or tri-carboxylic acids or ester-forming derivatives thereof such as acid halides, anhydrides or esters. The hydroxyl component may be one or more polyhydric alcohols or phenols (polyols) such as diols, triols, etc. (It is to be understood, however, that the polyester may contain, if desired, a proportion of carbonylamino linking groups -C(=O)-NH- (i.e. amide linking group) by including an appropriate amino functional reactant as part of the "hydroxyl component"; such as amide linkages are in fact useful in that they are more hydrolysis resistant and more hydrophilic.) The reaction to form a polyester may be conducted in one or more stages (as is well known). It would also be possible to introduce in-chain unsaturation into the polyester by e.g. employing as part of the acid component an olefinically unsaturated dicarboxylic acid or anhydride.

In order to achieve hydroxyl-functionality in the resulting polyester a stoichiometric excess of the hydroxyl component in relation to the acid component should be used, i.e. the ratio of OH groups/CO₂H groups should be >1. Furthermore in order to achieve an average hydroxyl functionality of ≥2.3 (average hydroxyl functionality = average number of hydroxyl groups per polymer molecule) it will be necessary for the polyester to have a branched structure, which may be achieved (as is conventional) by employing monomers having tri- or higher functionality (e.g. triols, tetrols, etc, tricarboxylic acids, tetracarboxylic acids, etc) in addition to monomers having difunctionality (such as diols and dicarboxylic acids). The hydroxyl groups may be located both terminally and laterally (chain pendant) on the polyesterchains.

There are many examples of carboxylic acids (or their ester forming derivatives) which can be used in polyester synthesis for the provision of the acid component. One can for example mention C₄ to C₂₀ aliphatic, alicyclic and aromatic dicarboxylic acids (or higher functionality acids) or their ester-forming derivatives (such as anhydrides, acid chlorides, or lower alkyl esters). Specific examples include adipic acid, fumaric acid, maleic acid, succinic acid, itaconic acid, sebacic acid, nonanedioic acid, decanedioic acid, 1,4-cyclohexanedicarboxylic acid, 1,3-cyclohexanedicarboxylic acid, 1,2-cyclohexanedicarboxylic acid, terephthalic acid, isophthalic acid, phthalic acid and tetrahydrophthalic acid. Anhydrides include succinic, maleic, phthalic and hexahydrophthalic anhydrides.

Similarly there are many examples of polyols which may be used in polyester synthesis for the provision of the hydroxyl component. The polyol(s) preferably have from 2 to 6 (2 to 4) hydroxyl groups per molecule. Suitable polyols with two hydroxy groups per molecule include diols such as 1,2-ethanediol, 1,3-propanediol, 1,4-butanediol, 1,6-exanediol, 2,2-dimethyl-1,3-propanediol (neopentyl glycol), the 1,2-, 1,3- and 1,4-cyclohexanediols and the corresponding cyclohexane dimethanols, diethylene glycol, dipropylene glycol, and diols such as alkoxylated bisphenol A products, e.g. ethoxylated or propoxylated bisphenol A. Suitable polyols with three hydroxy groups per molecule include triols such as trimethylolpropane (1,1,1-tris (hydroxymethyl)ethane) Suitable polyols with four or more hydroxy groups per molecule include pentaerythritol (2,2-bis(hydroxymethyl)-1,3-propanediol) and sorbitol (1,2,3,4,5,6-hexahydroxyhexane).

The chain-pendant sulphonate anion groups present in the polyester should be present in sufficient level to impart water-dispersibility thereto. Such lateral groups may be introduced into the polyester polymer molecules by using at least one monomer having two or more functional groups which will readily undergo an ester condensation reaction (i.e. carboxyl groups, hydroxyl groups or esterifiable derivatives thereof) and one or more sulphonic acid groups (for subsequent neutralisation after polyester formation) or sulphonate anion groups (i.e. neutralisation of the sulphonic acid groups already having been effected in the monomer). Preferably, the sulphonic acid or sulphonate anion containing monomer is a dicarboxylic acid monomer having at least one sulphonic acid salt group substituent (thereby avoiding the need to effect neutralisation subsequent to polyester formation), bearing in mind that neutralisation to form the monomer salt must not have been effected using an amine group or ammonia, and has preferably been affected using an inorganic base (e.g. NaOH). (Alternatively, alkyl ester groups may be used in place of the carboxylic acid groups.) Such a monomer will therefore be part of the acid component used in the polyester synthesis. Examples of such compounds are the alkali metal salts of sulphonic acid substituted aromatic dicarboxylic acid such as those of formula: 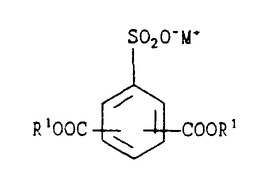 where M is sodium, lithium, or potassium and R¹ is H or lower alkyl of 1 to 5 carbon atoms (such as methyl or ethyl). Preferred examples of sulphonic acid salt substituted aromatic dicarboxylic acids are the alkali metal salts of 5-sulpho-1,3-benzene dicarboxylic acid, which have the formula: 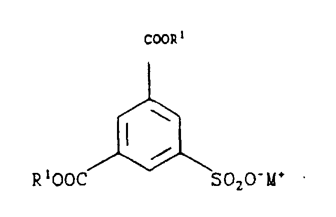 where M and R¹ are as defined above. Particularly preferred is the sodium salt (M=Na) where R¹=H, this material being known as sodio-5-sulphoisophthalic acid (SSIPA).

Other useful sulphonic acid containing monomers are the alkali metal salts of sulphonic acid substituted aromatic dicarboxylic acid-dihydroxyalkylesters which have the formula: 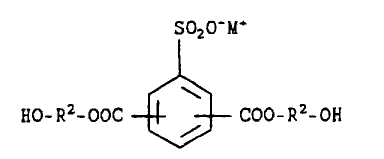 where M is sodium, potassium or lithium, and R² is an alkylene radical. (Such monomers will therefore, if used, form part of the hydroxyl component in the polyester synthesis.) Preferred examples of sulphonic acid salt substituted aromatic dicarboxylic acid-dihydroxyalkylesters are the alkali metal salts of 5-sulpho-1,3-benzenedicarboxylic acid-1,3-dihydroxyethylester which has the formula: 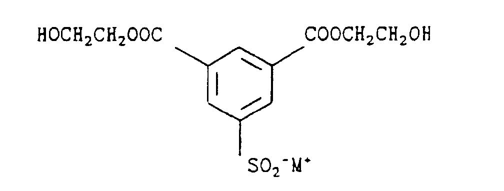 where M is sodium, lithium or potassium.

The monomer(s) containing the sulphonic acid salt groups is incorporated into the polyester at at least a level to ensure the self-dispersibility in water of the polyester. This level will depend on various factors such as, in particular. the molecular weight of the polyester and the hydrophilicity/hydrophobicity of units provided by other monomers in the polyester synthesis or additional surfactants used. Generally speaking, however, the sulphonate ion group content of the polyester will be within the range of from 7.5 to 100 milliequivalents of sulphonate groups per 100g of polyester, more preferably from 10 to 75 (particularly 11 to 56) millequivalents per 100g of polyester. When using SSIPA as the monomer for providing the stabilising sulphonate anions the level of this monomer used in the polyester synthesis, based on the weight of all the monomers used in the polyester synthesis, will usually be in the range of from 2 to 20% by weight, more usually 3 to 15% by weight. It can thus be seen that the level of sulphonate anion required to achieve water dispersibility is low (in comparison, say, to a level of carboxylate anion which would achieve corresponding water dispersibility) which means that the resulting film coating is low in neutralising cation content (e.g. Na ion content) in comparison to corresponding carboxylate ion-stabilised polyesters (also with Na cations, say), and therefore possesses stability to water and weather (by not being water-sensitive).

The polyester may also incorporate, if desired, hydrophilic non-ionic segments within the polyester backbone (i.e. in-chain incorporation) to further improve the dispersion stability of the polyester. For example, in-chain polyethylene oxide chains may be introduced into the polyester during its synthesis by using as part of the hydroxy component ethylene oxide-containing hydroxy functional compounds such as alkoxypolyethlene glycols and polyethylene glycols, examples of which include:

R³-O-(CH₂CH₂O)ₙ-H

HO-(CH₂CH₂O)ₘ-H

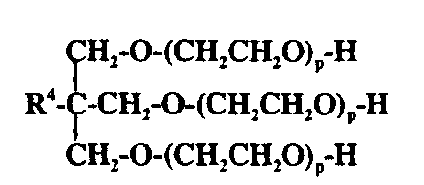

where R³ is alkyl of 1 to 20 carbon atoms (e.g. methyl), R⁴ is alkyl of 1 to 20 carbon atoms (e.g. ethyl), n is 1 to 500, m is 1 to 500, and p is 1 to 100.

Hydrophilic non-ionic polyethylene oxide chains could also be incorporated, using appropriate monomers, so that they are chain-pendant, rather than (or in addition to being) in-chain.

A small segment of a polyethylene oxide-unit may be replaced by a propylene oxide or butylene oxide chain in such non-ionic groups, but should still contain ethylene oxide as a major part of the chain.

The use of non-ionic stabilisation (whether in-chain and/or pendent) in combination with the use of a monomer such as SSIPA may be a particularly advantageous combination in the achievement of excellent dispersion stability, especially at higher temperatures.

The content of polyethylene oxide chains will generally be present at a level within the range of 0 to 25% by weight based on the total weight of polyester (more usually 0 to 15% by weight).

If the polyester is prepared using an acid or hydroxyl component which has unsaturation therein, such as one or more of fumaric acid, maleic acid and maleic anhydride for example (particularly fumaric acid), the product from the polyesterification reaction will have unsaturation incorporated into its structure, and can if desired be subjected to a further stage of polymerisation by a free radical mechanism, using free-radical generating initiator systems such as (for example) the redox radical initiator system tertiary butylhydroxide/ isoascorbic acid. This will act to cause further chain-extension of the polyester and such reaction will usually take place in the aqueous dispersion phase, rather than in the melt as when conducting the esterification polymerisation process. [In fact, if the amount of unsaturated component used in the polyester synthesis is very small, the value of Mn may not be measurably different to (or only slightly above) the value it was before chain-extension (possibly some hydrolysis in the chain extension step also compensating for Mn increase), although the high molecular weight fraction of the polyester will increase as demonstrated by a measurable increase in weight average molecular weight (Mw).]

Radically-polymerisable unsaturated comonomers can if desired be employed in such a chain-extending polymerisation, and may be optionally hydroxyl functional (such as hydroxyalkyl(meth)acrylates, e.g. hydroxyethylmethacrylate) - thereby resulting in the incorporation of further hydroxyl functionality into the polyester.

A composition according to the invention in which the polyester polyol component has been synthesised by first performing a polyesterification reaction such that the resulting polyester has unsaturation therein (e.g. by using a monomer such as fumaric acid) and has then been further chain extended by a free radical polymerisation in which the unsaturation takes part, is particularly useful as it tends to have very short drying times (at ambient temperature) to form tack free film coatings (even if there is no measurable increase in Mn).

An unsaturated polyester product may also be useful in other ways, and can e.g. be functionalised to provide further useful groups. For example an unsaturated polyester may be functionalised using compounds such as mercaptoethanol, (whereby the mercapto groups add to the double bonds via a Michael addition reaction) so as to further increase the hydroxy functionality of the polyester.

It would also be possible to introduce unsaturation into the polyester by functionalising a proportion of the hydroxyl groups using unsaturated fatty acids or unsaturated fatty acid-containing oligomers (by esterification), or by transesterification using (semi)-drying oils or maleinised oils - thereby to obtain dual cure systems whereby crosslinking could occur after coating formation not only by the NCO-OH reaction but also by autoxidation via the unsaturation from the fatty acid (or similar) compound.

In order for the polyester to be crosslinkable, its average hydroxyl functionality should be >2, more preferably ≥2.3, so that at least some of the polyester molecules will bear at least 3 hydroxyl groups. The upper level for the average hydroxyl functionality is preferably about 20. More preferably, the average functionality of the polyester will be within the range of from >2 to 20, particularly 2.3 to 20, and especially 2.3 to 8. Average hydroxyl functionality is determined herein by dividing the number average molecular weight (Mn) by the hydroxy equivalent weight (i.e. the amount of polymer in g having 1 equivalent of OH groups).

The number average molecular weight (Mn) of the polyester should be within the range of from 500 to <2,500, preferably from 750 to 2,300. (The measurement of Mn is well known to those skilled in the art, and may e.g. be effected using gel permeation chromatography in conjunction with a standard such as polystyrene of known molecular weight.)

The polyesters of the invention compositions preferably have a hydroxyl number within the range of from 25 to 250 mg KOH/g, more preferably 45 to 200 (corresponding to a hydroxyl group percentage of 1.1 to 7.6% w/w, more preferably 1.4 to 6.1% w/w) and preferably an acid value of 0 to 100 mg KOH/g, more preferably 0 to 50 mg KOH/g, and particularly 0 to 25 mg KOH/g (based on all the carboxyl groups, i.e. not including sulphonate groups).

The esterification polymerisation processes for making the polyesters for use in invention composition are well known and need not be described here in detail. Suffice to say that they are normally carried out in the melt using catalysts such as tin-based catalysts and with the provision for removing any water (or alcohol) formed from the condensation reaction.

The aqueous dispersion (component (A)) should be free of added amine or ammonia and amine or ammonium cations (including any amine or ammonia cations which neutralise acidic monomers prior to polymerisation and any amine or ammonia used to neutralise acidic groups after polyester formation) (such amine or ammonium cations should not be confused with amide groups which might be incorporated into the polyester as part of the polymer formation however). Preferably the pH of the dispersion is from 1.5 to less than 5, more preferably from 2.5 to 4.5.

An aqueous dispersion of the polyester (for the provision of component (A)) may be readily prepared by dispersion of the solidified melt from the condensation polymerisation directly into water. The solidified melt is preferably in a form such as flake (which can often be obtained directly from the melt) or comminuted solid (obtained for example by grinding). Alternatively, water can be added directly to the hot polyester melt until the desired solids content/viscosity is reached. Still further, the polyester may be dispersed in water by adding an aqueous pre-dispersion (or organic solvent solution) of the polyester to the water phase - as disclosed at page 8 lines 25 to 33 of EP-A-0367464 which is a disclosure relating to certain types of nonionically stabilised water-dispersible polyesters and their aqueous dispersions (and reference to which is incorporated herein).

The polyesters normally do not require the essential use of an external surfactant (emulsifier) when being dispersed into water, although such emulsifiers may be used to assist the dispersion if desired and in some cases can be useful in this respect because additional surfactants reduce the required amount of the dispersing groups (i.e. sulphonate, and ethylene oxide chains if used), improve the compatibility with the polyisocyanate, and improve the emulsification of the polyisocyanate with the polyester dispersion.

Any required chain-extension by free-radical polymerisation, in the case of an unsaturated polyester (see the discussion supra on this option), is preferably performed using the aqueous dispersion of the polyester (before incorporation of the polyisocyanate component).

The aqueous dispersion of the polyester (component (A)) preferably has a polyester solids content within the range of from 5 to 50wt% (10 to 45wt%) and a viscosity within the range of from 1 to 20,000mPa.s (10 to 15,000mPa.s).

The organic polyisocyanate component of the invention composition (component (B)) is preferably present in component (A) in emulsified form (although some combinations of polyisocyanate and polyester dispersion result in more solution-like mixtures as far as the polyisocyanate is concerned). The polyisocyanate may itself be self water-dispersible (by virtue e.g. of incorporated hydrophilic groups, such as polyethylene oxide chains) but this is not essential, since the dispersed polyester of component (A) simultaneously serves as an emulsifier for the added polyisocyanate. External surfactant(s) may also be used to assist in the emulsification, but, again, such use is not essential and depends on the nature/structure of the type of polyisocyanate used. The polyisocyanate may be mixed into the component (A) by any suitable technique - simple stirring at ambient temperature usually being sufficient. It may sometimes be useful to employ an organic liquid (e.g. ethylacetate) to facilitate mixing and decrease viscosity.

The polyisocyanate component may be any organic polyisocyanate containing (cyclo)aliphatically, araliphatically and/or aromatically bound NCO groups which are normally liquid at ambient temperature. More preferably, it is a polyisocyanate (or polyisocyanate mixture) having only aliphatically and/or cycloaliphatically bound isocyanate groups (and average NCO functionality of 2.1 to 5).

Suitable polyisocyanates include those based on 1,6-hexane-diisocyanate, 1-isocyanato-3,3,5-trimethyl-5-isocyanatomethyl cyclohexane (isophorone diisocyanate) and/or bis-(isocyanatocyclohexyl)-methane, namely the biuret, urethane, uretdione and/or isocyanurate derivatives of such diisocyanates. Preferred aliphatic polyisocyanates include biuret polyisocyanates based on 1,6-hexane-diisocyanates and which are based on mixtures of N,N',N"-tris-(6-isocyanatohexyl)-polyisocyanates with small quantities of its higher homologues. Also preferred are the cyclic trimers of 1,6-hexane-diisocyanate which are based on N,N',N"-tris-(6-isocyanatohexyl)-isocyanurate in admixture with small quantities of its higher homologues. Also preferred are such trimers when modified with polyethylene oxide chains to render them water-dispersible.

Aromatic polyisocyanates which may be used include those based on 2,4-diisocyanato-toluene or commercial mixtures thereof with 2,6-diisocyanato-toluene, or based on 4,4'-diisocyanatodiphenylmethane or mixtures thereof with its isomers and/or higher homologues.

For a more comprehensive disclosure on suitable polyisocyanates for use in the invention composition, reference is made to page 8, 9 and 10 of the abovementioned AU-A-41135/89.

The invention compositions preferably incorporate hydroxyl-functional polyester(s) and polyisocyanate(s) at levels to provide an NCO/OH equivalent ratio (based on the isocyanate groups of component (B) and the hydroxyl groups of component (A)) within the range from 0.1/1 to 5/1, more preferably 0.25/1 to 3/1, and particularly 0.5/1 to 2.5/1.

The coating compositions of the invention may find applicability in a wide range of fields (for the purposes of e.g. protective, decorative, adhesive, sealant or graphic arts coating) and may be employed as surface coating compositions in, for example, paints, lacquers, varnishes and inks.

As coating compositions they may be applied to a variety of substrates, such as metals; wood: wood-based materials (such as particle board, fibreboard and paper); cloth: leather; glass: mineral building materials such as stone, concrete, lime- and/or cement-based plasters, gypsum-containing surfaces, fibre-cement building material and gypsum-containing surfaces; plastics; and foam. Application may be by any conventional method including brushing, dipping, flow coating, spraying, roller coating, pad coating and the like.

The coating compositions may contain other ingredients, additives or auxiliaries, such as pigments, dyes, emulsifiers (surfactants), pigment dispersion aids, levelling agents, anti-cratering agents, antifoam agents, sedimention inhibitors, heat stabilisers, UV absorbers, antioxidants, fillers and so on. Other types of polymer and polymer dispersions may be included in the invention compositions - e.g. acrylic polymer emulsions, aqueous polyurethane dispersions, and aqueous bead polymer solutions.

It is also possible to incorporate reactive diluents into the composition, such as water-soluble mono or (preferably) polyhydric alcohols examples of which include ethylene glycol, propylene glycol, isomeric butane diols, the polyethylene glycols or polypropylene glycols, trimethylol propane, pentaerithritol, and glycerine. Such other ingredients, additives and auxiliaries are best incorporated into component (A) of the composition before the addition of component (B).

The coating compositions once applied may be allowed to dry naturally at ambient temperature, or the drying process may be accelerated by heat. Crosslinking can be developed by allowing to stand for a prolonged period at ambient temperature (several days) or by heating at an elevated temperature for a much shorter period of time (in which case the drying and crosslink development steps can be combined into one operation if desired).

The present invention is now illustrated, but not limited, by reference to the following examples. Unless otherwise specified all parts, percentages and ratios are on a weight basis.

A series of aqueous dispersions of branched water-dispersible polyester polyols were prepared (Examples 1 to 4) using the following recipes and procedures. These were then incorporated into compositions according to the invention (Examples 5 to 14).

### Example 1 Preparation of branched water dispersible polyester polyol.

| Ingredients | | Parts by weight |
|---|---|---|
| Isophthalic acid | A | 1195.0 |
| Sodio-5-sulpho isophthalic acid | B | 558.7 |
| Neopentyl glycol (90% in water) | C | 1565.7 |
| Trimethylolpropane | D | 818.2 |
| Fascat 4100* | E | 0.1 |
| Isophthalic acid | F | 1195.3 |
| Methoxypolyethylene glycol 750 | G | 415.5 |
| Fascat 4100* | H | 0.4 |

| | | |
|---|---|---|
| (*Sn-based catalyst) | | |

Components A, B, C, D and E were charged to a 6 litres four neck flask fitted with stirrer, condenser, nitrogen inlet and thermocouple. The resulting mixture was heated over 2 hours to a temperature of 175°C. Water of distillation was collected. The reaction was held at this temperature until the reaction melt became clear. The temperature was reduced to 140°C and the remaining components F, G, and H were charged to the reactor which was gradually heated up to 210°C. The esterification mixture was monitored by acid value determination until an acid value of 11.1 mg KOH/g was obtained. The practical hydroxyl value was 142mg KOH/g. Mn was 1050 and average OH functionality was 2.66. The polyester is produced as a 100% flake. These flakes were ground and dissolved into water to yield a translucent dispersion with a solids content of 32.91%, pH=2.8 and a Brookfield viscosity of 176mPa.s at 25°C.

### Example 2 Preparation of branched water dispersible polyester polyol.

| Ingredients | | Parts by weight |
|---|---|---|
| Isophthalic acid | A | 467.8 |
| Sodio-5-sulpho isophthalic acid | B | 222.9 |
| Neopentyl glycol (90% in water) | C | 624.6 |
| Pentaerythritol | D | 331.7 |
| Pascat 4100 | E | 0.66 |
| Isophthalic acid | F | 467.8 |
| Methoxypolyethylene glycol 750 | G | 165.8 |
| Fascat 4100 | H | 0.66 |

This resin was prepared in the same way as described in Example 1 using a 2 litre flask but stopped at acid value = 12.4mg KOH/g and has a practical hydroxy value of 183mg KOH/g. Mn was 900 and average OH functionality was 2.94. The polyester was ground and the powder was dissolved into water resulting in a translucent dispersion with a solid content of 30.9%, pH=2.7 and a Brookfield viscosity of 210mPa.s at 25°C.

### Example 3 Preparation of branched water dispersible polyester polyol.

| Ingredients | | Parts by weight |
|---|---|---|
| Isophthalic acid | A | 438.1 |
| Sodio-5-sulpho isophthalic acid | B | 224.3 |
| Neopentyl glycol (90% in water) | C | 635.6 |
| Trimethylol propane | D | 332.2 |
| Fascat 4100 | E | 0.66 |
| Isophthalic acid | F | 438.1 |
| Methoxypolyethylene glycol 750 | G | 168.7 |
| Fumaric acid | H | 67.0 |
| Fascat 4100 | I | 0.66 |

This resin was prepared in the same way as described in Example 1 using a 2 litre flask but stopped at acid value = 10.4mg KOH/g and has a practical hydroxy value of 135mg KOH/g. Mn was 1040 and average OH functionality was 2.63. The polyester was ground and the powder was dissolved into water resulting in a translucent dispersion with a solid content of 32.1%, pH=2.8 and a Brookfield viscosity of 120mPa.s at 25°C.

### Example 4 Radical chain extension of polyester of Example 3.

40.15g of a 10% (w/w) solution of tertiary butylhydroperoxide in water was added to 1250g of the dispersion of Example 3, the temperature of the mixture was raised to 80°C and 80.3g of 5% (w/w) solution in water of iso-ascorbic acid was added dropwise during 2 hours. After addition the reaction mixture was held at 80°C for another 30 minutes and cooled down to room temperature. The dispersion had a solid content of 30.02%, pH=2.5 and a Brookfield viscosity of 50mPa.s at 25°C. Mn was 1040 and average OH functionality was 2.63. (Note that although Mn did not change over the value from Example 3, probably due to the very small amount of fumaric acid used and possibly some hydrolysis in the chain extension compensating for some Mn increase, the value of weight average molecular weight Mw did increase from 2370 in Example 3 to 2530 after chain extension in Example 4, demonstrating that the high molecular weight fraction of the polyester had increased).

### Example 5 Preparation of Invention Composition.

Varying amounts of the polyisocyanate Desmodur DA (ex Bayer: NCO%=19.5) were stirred into the polyester resin dispersion from Example 1. (Desmodur DA is polyethylene oxide-modified triisocyanurate, i.e. the trimer of hexamethylene diisocyanate, modified with polyethylene oxide). To facilitate mixing and to decrease the viscosity, the polyisocyanate was diluted with ethylacetate (50/50 w/w). Ready to use clear lacquers were obtained having NCO/OH ratios 0.5/1 to 2.5/1 (Table 1). Films were cast at 80µm wet layer thickness onto glass plates and cured in an oven overnight at 50°C. After cure, pendulum hardness and solvent resistances were determined by carrying out the double MEK rubs test: a cotton wool soaked with methyl ethyl ketone is rubbed up and down over the film surface. This is carried out to a maximum of 200 double rubs. If the film dissolves or disappears before the 200 double rubs is reached then the number of double rubs is reported. If 200 double rubs is reached, the film is assessed and a mark (0-5) is given for its solvent resistance: 0=poor, 5=excellent. Thus, 200x (5) means 200 double rubs and the film is not damaged at all indicating excellent solvent resistance.

Also films were cast at 75µm wet layer thickness onto cardboard testcharts and cured in the oven overnight at 50°C. After cure the solvent resistances were determined by carrying out 16 hours stain tests of water, ethanol, detergent and coffee and additionally by a 1 hour hot water performance: 0=poor, 5=excellent. Best score for stain resistances is 25 points, this corresponds with a score of 100%.

The cured films had the following scores:

**Table 1:**

| Parts by weight of solid polyisocyanate on total (% s/s) | NCO/OH (eq/eq) | Pendulum hardness (s. Konig) | Stain resistances | Solvent resistances: number of double rubs |
|---|---|---|---|---|
| | | | Score | MEK |
| 0 | - | 189 | 8% | 7x |
| 21.4% | 0.5/1 | 223 | 46% | 190x |
| 29.0% | 0.75/1 | 229 | 86% | 200x (4) |
| 35.3% | 1.0/1 | 226 | 92% | 200x (4/5) |
| 40.5 | 1.25/1 | 226 | 100% | 200x (5) |
| 57.7% | 2.5/1 | 213 | 100% | 200x (5) |

### Example 6 Preparation of Invention Composition.

Varying amounts of a polyisocyanate (Desmodur DA) solution in ethylacetate (50/50 w/w) were stirred into the polyester dispersion from Example 2.

Ready to use clear lacquers were obtained having NCO/OH ratios of 0.5/1 to 1.25/1 (Table 2). Films were cast at 80µm wet layer thickness onto glass plates and cardboard test charts cured at 80°C overnight. The cured films had the following properties:

**Table 2:**

| Parts by weight of solid polyisocyanate on total | NCO/OH (eq/eq) | Pendulum hardness (s. Konig) | Stain resistances | Solvent resistances: number of double rubs |
|---|---|---|---|---|
| | | | Score | MEK |
| 26.0% | 0.5/1 | 207 | 86% | 200x (5) |
| 34.5% | 0.75/1 | 233 | 94% | 200x (5) |
| 41.3% | 1.0/1 | 223 | 100% | 200x (5) |
| 46.8% | 1.25/1 | 224 | 100% | 200x (5) |

### Example 7 Preparation of Invention Composition.

Varying amounts of a polyisocyanate (Desmodur DA) solution in ethylacetate (50/50 w/w) were stirred into the polyester dispersion from Example 3.

Ready to use clear lacquers were obtained having NCO/OH ratios of 0.5/1 to 1.25/1 (Table 3). Films were cast at 80µm wet layer thickness onto glass plates and cardboard test charts cured at 50°C overnight. The cured films had the following properties:

**Table 3:**

| Parts by weight of solid polyisocyanate on total | NCO/OH (eq/eq) | Pendulum hardness (s. Konig) | Stain resistances | Solvent resistances: number of double rubs |
|---|---|---|---|---|
| | | | Score | MEK |
| 20.6% | 0.5/1 | 207 | 66% | 200x (0) |
| 28.0% | 0.75/1 | 231 | 70% | 200x (4/5) |
| 34.2% | 1.0/1 | 226 | 90% | 200x (5) |
| 39.4% | 1.25/1 | 220 | 100% | 200x (5) |

### Example 8 Preparation of Invention Composition.

Varying amounts of a polyisocyanate (Desmodur DA) solution in ethylacetate (50/50 w/w) were stirred into the polyester dispersion from Example 4.

Ready to use clear lacquers were obtained having NCO/OH ratios of 0.25/1 to 1.0/1 (Table 4). Films were cast at 80µm wet layer thickness onto glass plates and cardboard test charts cured at 50°C overnight. The cured films had the following properties:

**Table 4:**

| Parts by weight of solid polyisocyanate on total | NCO/OH (eq/eq) | Pendulum hardness (s. Konig) | Stain resistances | Solvent resistances: number of double rubs |
|---|---|---|---|---|
| | | | Score | MEK |
| 11.5% | 0.25/1 | 233 | 42% | 116x |
| 20.6% | 0.50/1 | 215 | 78% | 200x (0) |
| 28.0% | 0.75/1 | 236 | 96% | 200x (5) |
| 34.2% | 1.0/1 | 229 | 98% | 200x (5) |

### Example 9 Demonstration of Curing at Room Temperature of Invention Composition.

An invention composition was prepared, being a combination of the polyester dispersion of Example 1 with a Desmodur DA solution in ethyl acetate (50/50 w/w) (NCO/OH ratio = 1.25 eq/eq). Films were cast at 80µm wet layer thickness on cardboard test charts cured at room temperature. This resulted in the following properties (Table 5):

**Table 5:**

| Cure schedule at room temperature | Stain resistances |
|---|---|
| | Score |
| 1 day | 62% |
| 3 days | 86% |
| 1 week | 92% |
| 2 weeks | 94% |
| 6 weeks | 100% |

### Example 10 Investigation of Pot Life of Invention Compositions

The pot life of the combination of the polyester dispersion of Example 1 with a Desmodur DA solution in ethylacetate (50/50 w/w) (ratio NCO/OH = 1.25 eq/eq) was investigated by monitoring the colloid stability of the mixture at intervals up to 24 hours after mixing (Table 6); this remained unchanged (good) over the 24 hour period investigated. Also investigated were the properties of the (cured) films (80µm films being cast onto glass at varying intervals after mixing: hardness and solvent resistances were determined after drying overnight at 80°C). These were still reasonably good at the end of the 24 hour period investigated and remained entirely unchanged for up to 10 hours after mixing).

**Table 6:**

| Time after mixing (hours) | Colloid stability | Film appearance | Pendulum hardness (s. Konig) | Solvent resistances: number of double rubs |
|---|---|---|---|---|
| | | | | MEK |
| 0 | good | clear | 226 | 200x (5) |
| 2 | good | clear | 230 | 200x (5) |
| 4 | good | clear | 222 | 200x (5) |
| 6 | good | clear | 229 | 200x (5) |
| 8 | good | clear | 221 | 200x (5) |
| 10 | good | clear | 224 | 200x (5) |
| 14 | good | hazy | 156 | 200x (5) |
| 24 | good | hazy | 157 | 200x (4) |

### Example 11 Investigation of Pot Life of Invention Compositions

The pot life of the combination of the polyester dispersion of Example 2 with a Desmodur DA solution in ethylacetate (50/50 w/w) (ratio NCO/OH = 1.0 eq/eq) was investigated as described in Example 10. Colloid stability was good for the 24 hour period investigated and film properties were still reasonably good at the end of the 24 hour period ingestiaged and remained entirely unchanged for up to 8 hours after mixing.

**Table 7:**

| Time after mixing (hours) | Colloid stability | Film appearance | Pendulum hardness (s. Konig) | Solvent resistances: number of double rubs |
|---|---|---|---|---|
| | | | | MEK |
| 0 | good | clear | 226 | 200x (5) |
| 2 | good | clear | 230 | 200x (5) |
| 4 | good | clear | 222 | 200x (5) |
| 6 | good | clear | 229 | 200x (5) |
| 8 | good | clear | 221 | 200x (5) |
| 10 | good | hazy | 195 | 200x (5) |
| 24 | good | hazy | 172 | 200x (5) |

### Example 12 Investigation of Pot Life of Invention Compositions

The pot life of the combination of the polyester dispersion of Example 4 with a Desmodur DA solution in ethylacetate (50/50 w/w) (ratio NCO/OH = 1.0 eq/eq) was investigated as described in Example 10. Colloid stability was good for most of the 24 hour period investigated and film properties were still reasonably good at the end of the 24 hour period investiaged and remained entirely unchanged for up to 8 hours after mixing.

**Table 8:**

| Time after mixing (hours) | Colloid stability | Film appearance | Pendulum hardness (s. Konig) | Solvent resistances: number of double rubs |
|---|---|---|---|---|
| | | | | MEK |
| 0 | good | clear | 226 | 200x (5) |
| 2 | good | clear | 230 | 200x (5) |
| 4 | good | clear | 222 | 200x (5) |
| 6 | good | clear | 229 | 200x (5) |
| 8 | good | clear | 221 | 200x (5) |
| 10 | good | hazy | 197 | 200×(5) |
| 14 | good | hazy | 157 | 200x (5) |
| 24 | viscous | hazy | 144 | 200x (4) |

### Example 13 Preparation of Invention Composition.

A composition was prepared which excluded the organic solvent ethylacetate in order to show that clear lacquers can still be obtained. The pure polyisocyanate (Desmodur DA) was stirred into the polyester dispersion of Example 1.

A ready-to-use clear lacquer was obtained with a NCO/OH ratio of 1.1/1 (Table 9). Films were cast at 80 µm wet layer thickness onto glass plates and cured at 60°C for 45 minutes. The cured film had the following properties.

**Table 9**

| Parts by weight of solid polyisocyanate on total | NCO/OH (eq/eq) | Pendulum hardness (s.Konig) | Solvent resistance: number of double rubs (MEK) |
|---|---|---|---|
| 37.5% | 1.1/1 | 165 | 200x (5) |

### Example 14 Comparison of Tack-free Times at Room Temperature.

The tack free times of the dispersions of Examples 1, 2, 4 admixed with a Desmodur DA solution in ethylacetate (50/50 w(w) (ratio NCO/OH=1.25) were measured (tack-free time can be defined as time in which the film develops sufficient hardness so that it is non sticky when pressed with the thumb on the film).

| Polyester Source | Tack free time at room temperature |
|---|---|
| Example 1 | 6 hours |
| Example 2 | > 8 hours |
| Example 4 | 30 minutes |

These results show that the composition which contained the radically extended polyester of Example 4 exhibited significantly reduced tack-free time.

## Claims

1. Aqueous-based crosslinkable coating composition comprising:
(A) an aqueous dispersion of at least one hydroxyl-functional polyester oligomer in which:
(i) said polyester has an average hydroxyl functionality of ≥2.3;
(ii) said polyester incorporates chain pendant sulphonate anion groups which impart water-dispersibility thereto;
(iii) said polyester has a number average molecular weight within the range of from 500 to below 2,500; and
(B) least one organic polyisocyanate;
wherein said composition is free of any added amine or ammonia and any amine or ammonium cations.

2. Composition according to Claim 1 wherein said aqueous dispersion (A) has a pH of between 1.5 to less than 5.

3. Composition according to any one of the preceding claims wherein said sulphonate anion groups are present in the polyester oligomer by employing as an acid component in the polyester synthesis an alkali metal salt of a sulphonic acid substituted aromatic dicarboxylic acid or ester.

4. Composition according to Claim 3 wherein said acid component is sodio-5-sulphoisophthalic acid.

5. Composition according to any one of Claims 1 to 4 wherein said polyester has hydrophilic polyethylene oxide chains incorporated therein and the sulphonate anion groups are derived from an acid component of formula 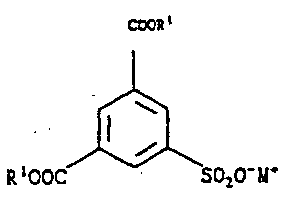 where M is sodium, lithium or potassium and R¹ is H or lower alkyl of 1 to 5 carbon atoms.

6. Composition according to Claim 5 wherein said acid component is sodio-5-sulphoisophthalic acid.

7. Composition according to any one of the preceding claims wherein the sulphonate ion group content of the polyester is within the range of from 7.5 to 100 milliequivalents of sulphonate groups per 100g of polyester.

8. Composition according to any one of the preceding claims wherein in the polyester synthesis to form the polyester there is used an acid or hydroxyl component having unsaturation therein.

9. Composition according to Claim 8 wherein said polyester has been synthesised using first a polyesterification reaction to provide an initial polyester having unsaturation derived from said unsaturated acid or hydroxyl component and then a free-radical polymerisation in which the unsaturation takes part.

10. Composition according to either Claim 8 or Claim 9 wherein said component providing unsaturation is selected from one or more of fumaric acid, maleic acid and maleic anhydride.

11. Composition according to any one of the preceding claims wherein said polyisocyanate (B) is present in component (A) in emulsified form.

12. Composition according to any one of the preceding claims wherein the NCO/OH equivalent ratio, based on the isocyanate groups of component (B) and the hydroxyl groups of component (A), is within the range of from 0.1/1 to 5/1.

13. Composition according to any one of the preceding claims wherein said composition includes another type of polymer or polymer dispersion.

14. Composition according to any one of the preceding claims wherein said composition includes a reactive diluent.

15. Method of coating a substrate, which comprises applying a coating composition according to any one of Claims 1 to 14 to a substrate, causing or allowing the aqueous-based carrier phase of the composition to be removed, and developing crosslinking of the coating that has been applied to the substrate.

16. A crosslinked coating which has been obtained from a coating composition according to any one of Claims 1 to 14.

17. A coated substrate which has been prepared by applying a coating composition according to any one of Claims 1 to 14 to a substrate, causing or allowing the aqueous-based carrier phase of the composition to be removed, and developing crosslinking of the coating that has been applied to the substrate.

## Revendications

1. Composition de revêtement réticulable aqueuse comprenant :
(a) une dispersion aqueuse d'au moins un oligomère de polyester à fonctionnalité hydroxyle dans lequel :
(i) ledit polyester a une fonctionnalité hydroxyle moyenne ≥ 2,3 ;
(ii) ledit polyester renferme des groupes anioniques sulfonate appendus à la chaîne, qui confère à ce polyester une dispersibilité dans l'eau ;
(iii) ledit polyester a une moyenne en nombre du poids moléculaire comprise dans l'intervalle de 500 à moins de 2500 ; et
(B) au moins un polyisocyanate organique ;
ladite composition étant dépourvue de toute quantité ajoutée d'amine ou d'ammoniac et de toute quantité de cations amine ou ammonium.

2. Composition selon la revendication 1, dans laquelle ladite dispersion aqueuse (A) a un pH compris entre 1,5 et moins de 5.

3. Composition selon l'une quelconque des revendications précédentes, dans laquelle les groupes anions sulfonates sont présents dans l'oligomère polyester grâce à l'utilisation d'un sel de métal alcalin d'un acide ou d'un ester dicarboxylique aromatique substitué par un acide sulfonique, comme composant acide pendant la synthèse du polyester.

4. Composition selon la revendication 3, dans laquelle ledit composant acide est l'acide sodio-5-sulfoisophtalique.

5. Composition selon l'une quelconque des revendications 1 à 4, dans laquelle ledit polyester a des chaînes hydrophiles d'oxyde de polyéthylène incorporées dans celui-ci, et les groupes anions sulfonates proviennent d'un composant acide répondant à la formule 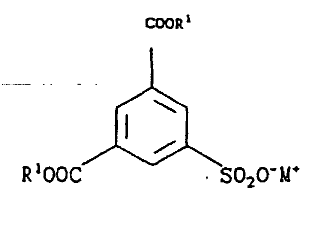 où M est le sodium, le lithium ou le potassium, et R¹ est H ou un groupe alkyle inférieur ayant de 1 à 5 atomes de carbone.

6. Composition selon la revendication 5, dans laquelle ledit composant acide est l'acide sodio-5-sulfoisophtalique.

7. Composition selon l'une quelconque des revendications précédentes, dans laquelle la teneur en groupes ions sulfonates du polyester est comprise entre 7,5 et 100 milli-équivalents de groupes sulfonates pour 100 g de polyester.

8. Composition selon l'une quelconque des revendications précédentes, où on utilise un composant acide ou hydroxyle insaturé pendant la synthèse du polyester pour former ledit polyester.

9. Composition selon la revendication 8, ledit polyester ayant été synthétisé au moyen d'une première réaction de polyestérification pour fournir un polyester initial ayant une insaturation, provenant dudit composant acide ou hydroxyle insaturé, et ensuite, une polymérisation radicalaire à laquelle l'insaturation prend part.

10. Composition selon la revendication 8 ou la revendication 9, dans laquelle ledit composant fournissant l'insaturation est un ou plusieurs des éléments choisis parmi l'acide fumarique, l'acide maléique et l'anhydride maléique.

11. Composition selon l'une quelconque des revendications précédentes, dans laquelle ledit polyisocyanate (B) est présent dans le composant (A) à l'état émulsionné.

12. Composition selon l'une quelconque des revendications précédentes, dans laquelle le rapport d'équivalents NCO/OH, sur la base des groupes isocyanates du composant (B) et des groupes hydroxyles du composant (A), est compris entre 0,1/1 et 5/1.

13. Composition selon l'une quelconque des revendications précédentes, ladite composition comprenant un autre type de polymère ou de dispersion de polymère.

14. Composition selon l'une quelconque des revendications précédentes, ladite composition comprenant un diluant réactif.

15. Procédé de revêtement d'un substrat, comprenant les étapes consistant à appliquer une composition de revêtement selon l'une quelconque des revendications 1 à 14 sur un substrat, obliger ou permettre l'élimination de la phase support aqueux de la composition et développer la réticulation du revêtement qui a été appliqué sur le substrat.

16. Revêtement réticulé obtenu à partir d'une composition de revêtement selon l'une quelconque des revendications 1 à 14.

17. Substrat revêtu qu'on prépare en appliquant une composition de revêtement selon l'une quelconque des revendications 1 à 14 sur un substrat, en obligeant ou permettant l'élimination de la phase support aqueux de la composition et en développant la réticulation du revêtement qu'on a appliqué sur le substrat.

## Patentansprüche

1. Vernetzbare Beschichtungszusammensetzung auf Wasserbasis, die
(A) eine wäßrige Dispersion aus mindestens einem Polyesteroligomer mit Hydroxyl-Funktionalität, wobei
(i) der Polyester eine durchschnittliche Hydroxyl-Funktionalität von >2,3 hat;
(ii) der Polyester an der Kette hängende Sulfonat-Anionengruppen, die Wasserdispergierbarkeit verleihen, beinhaltet;
(iii) der Polyester ein Zahlenmittel des Molekulargewichts von 500 bis unter 2.500 hat; und
(B) mindestens ein organisches Polyisocyanat enthält,
wobei die Zusammensetzung frei von irgendeinem zugesetzten Amin oder Ammoniak und irgendwelchen Amin- oder Ammoniak-Kationen ist.

2. Zusammensetzung nach Anspruch 1, in der die wäßrige Dispersion einen pH von 1,5 bis weniger als 5 hat.

3. Zusammensetzung nach einem der vorangehenden Ansprüche, in der die Sulfonat-Aniongruppen in dem Polyesteroligomer vorliegen, indem als Säurekomponente in der Polyestersynthese ein Alkalimetallsalz einer durch Sulfonsäure substituierten aromatischen Dicarbonsäure oder eines durch Sulfonsäure substituierten aromatischen Dicarbonsäureesters verwendet wird.

4. Zusammetzung nach Anspruch 3, in der die Säurekomponente Natrium-5-sulfoisophthalsäure ist.

5. Zusammensetzung nach einem der Ansprüche 1 bis 4, in der der Polyester hydrophile Polyethylenoxidketten eingearbeitet enthält, und die Sulfonatanionengruppen von einer Säurekomponente der folgenden Formel stammen: 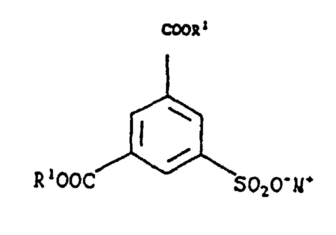 in der M Natrium, Lithium oder Kalium ist, und R¹ H oder niedriges Alkyl mit 1 bis 5 Kohlenstoffatomen ist.

6. Zusammensetzung nach Anspruch 5, in der die Säurekomponente Natrium-5-sulfoisophthalsäure ist.

7. Zusammensetzung nach einem der vorangehenden Ansprüche, in der der Gehalt des Polyesters an Sulfonation-Gruppen im Bereich zwischen 7,5 und 100 Milliäquivalenten Sulfonat-Gruppen pro 100 g Polyester ist.

8. Zusammensetzung nach einem der vorangehenden Ansprüche, wobei in der Polyestersythese zur Bildung des Polyesters eine Säure- oder Hydroxyl-Komponente, die eine Ungesättigtheit enthält, verwendet wird.

9. Zusammensetzung nach Anspruch 8, wobei der Polyester synthetisiert wird, indem zuerst eine Polyesterbildungsreaktion zur Bereitstellung eines anfänglichen Polyesters, der eine Ungesättigtheit, welche von der ungesättigten Säure- oder Hydroxyl-Komponente stammt, enthält, und dann eine Radikalpolymerisation, an der die Ungesättigtheit teilnimmt, durchgeführt werden.

10. Zusammensetzung nach Anspruch 8 oder Anspruch 9, wobei die Komponente, die eine Ungesättigtheit hat, aus einer oder mehreren der folgenden ausgewählt ist: Fumarsäure, Maleinsäure und Maleinsäureanhydrid.

11. Zusammensetzung nach einem der vorangehenden Ansprüche, wobei das Polyisocyanat (B) in Komponente (A) in emulgierter Form vorliegt.

12. Zusammensetzung nach einem der vorangehenden Ansprüche, wobei das NCO/OH-Äquivalentverhältnis, bezogen auf die Isocyanat-Gruppen von Komponente (B) und die Hydroxyl-Gruppen von Komponente (A) im Bereich von 0,1/1 bis 5/1 liegt.

13. Zusammensetzung nach einem der vorangehenden Ansprüche, wobei die Zusammensetzung einen weiteren Typ eines Polymeren oder einer Polymerdispersion enthält.

14. Zusammensetzung nach einem der vorangehenden Ansprüche, wobei die Zusammensetzung ein reaktives Verdünnungsmittel enthält.

15. Verfahren zum Beschichten eines Substrats, das ein Auftragen einer Beschichtungszusammensetzung nach einem der Ansprüche 1 bis 14 auf ein Substrat; Zulassen oder Veranlassen, daß die Trägerphase auf Wasserbasis aus der Zusammensetzung entfernt wird; und Entwickeln einer Vernetzung der Beschichtung, die auf das Substrat aufgetragen wurde, umfaßt.

16. Vernetzte Beschichtung, die aus einer Beschichtungszusammensetzung nach einem der Ansprüche 1 bis 14 erhalten wird.

17. Beschichtetes Substrat, das durch Auftragen einer Beschichtungszusammensetzung nach einem der Ansprüche 1 bis 14 auf ein Substrat; Zulassen oder Bewirken, daß die Trägerphase auf Wasserbasis aus der Zusammensetzung entfernt wird; und Entwickeln einer Vernetzung der Beschichtung, die auf das Substrat aufgetragen wurde, erhalten wird.
